(19)

Europäisches Patentamt
European Patent Office
Office européen des brevets

(11) **EP 3 285 381 A1**

(12) **EUROPÄISCHE PATENTANMELDUNG**

(43) Veröffentlichungstag:
**21.02.2018   Patentblatt 2018/08**

(51) Int Cl.:
**H02M 1/12** *(2006.01)*          **H02P 27/08** *(2006.01)*
**H02P 29/50** *(2016.01)*

(21) Anmeldenummer: **17183200.9**

(22) Anmeldetag: **26.07.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **15.08.2016   DE 102016215175**

(71) Anmelder: **Brose Fahrzeugteile GmbH & Co. Kommanditgesellschaft, Würzburg 97076 Würzburg (DE)**

(72) Erfinder: **SCHWARZKOPF, Johannes 97828 Marktheidenfeld (DE)**

(74) Vertreter: **FDST Patentanwälte Nordostpark 16 90411 Nürnberg (DE)**

(54)  **VERFAHREN ZUM BETREIBEN EINER ELEKTRISCHEN MASCHINE UND ELEKTRISCHE MASCHINE**

(57)      Die Erfindung betrifft ein Verfahren zum Betreiben einer elektrischen Maschine (2) mit einer Stromquelle (8) und mit einem Elektromotor (4) sowie mit einem dazwischen geschalteten Stromrichter (6), bei welchem ein Eingangsstrom ($I_E$) der Stromquelle (8) mittels einer pulsweitenmodulierten Ansteuerung einer Anzahl von Halbleiterschaltern (44, 46) des Stromrichters (6) in einen mehrphasigen Ausgangsstrom ($I_U$, $I_V$, $I_W$) für den Elektromotor (4) gewandelt wird, wobei der oder jeder Puls (Pu, Pv, $P_W$) zu einem ersten Zeitpunkt (72, 74, 76) erzeugt und nach einer Pulsdauer ($T_U$, $T_V$, $T_W$) zu einem zweiten Zeitpunkt (78, 80, 82) beendet wird, bei welchem für jeden Wechselstromanteil ($I_1$, $I_2$), der im Zuge der pulsweitenmodulierten Ansteuerung der Halbleiterschalter (44, 46) in einem Zwischenkreis (12) der Stromquelle (8) erzeugt wird, ein Frequenzspektrum ($F_1(\omega)$, $F_2(\omega)$) bestimmt wird, und bei welchem die Pulsdauern ($T_U'$, $T_V'$, $T_W'$) der Pulse ($P_U'$, $P_V'$, $P_W'$) der pulsweitenmodulierten Ansteuerung derart eingestellt werden, dass die Summe der Frequenzspektren ($F_{res}(\omega)$) der Wechselstromanteile ($I_1$, $I_2$) minimal wird.

FIG. 5

**Beschreibung**

Die Erfindung betrifft ein Verfahren zum Betreiben einer elektrischen Maschine mit einer Stromquelle und mit einem Elektromotor sowie mit einem dazwischen geschalteten Stromrichter, bei welchem ein Eingangsstrom der Stromquelle mittels einer pulsweitenmodulierten Ansteuerung einer Anzahl von Halbleiterschaltern des Stromrichters in einen mehrphasigen Ausgangsstrom für den Elektromotor gewandelt wird, wobei der oder jeder Puls zu einem ersten Zeitpunkt erzeugt und nach einer Pulsdauer zu einem zweiten Zeitpunkt beendet wird. Die Erfindung betrifft weiterhin eine nach einem derartigen Verfahren betriebene elektrische Maschine, insbesondere für ein Kraftfahrzeug.

Elektromotorisch betriebene Verstellsysteme als Kraftfahrzeugkomponenten, wie beispielsweise Fensterheber, Sitzverstellungen, Tür- und Schiebedachantriebe oder Kühlerlüfterantriebe sowie Pumpen und Innenraumgebläse weisen typischerweise eine elektrische Maschine mit einem gesteuerten Elektromotor auf. Zum Beispiel sind hierfür bürstenlose Elektromotoren bekannt, bei denen ein gegenüber einem Stator drehbar gelagerter Rotor durch ein magnetisches Drehfeld angetrieben wird. Hierzu werden Phasenwicklungen des Stators mit einem entsprechenden elektrischen Drehoder Motorstrom beaufschlagt, welcher mittels eines Controllers als Teil einer (Motor-)Elektronik gesteuert und geregelt wird.

Derartige elektrische Maschinen umfassen in der Regel eine (Hochvolt-)Batterie als fahrzeuginternen Energiespeicher, aus welchem der Elektromotor mit elektrischer Energie in Form eines Gleichstroms versorgt wird. Zur Wandlung des Gleichstroms in den Motorstrom ist geeigneterweise ein Stromrichter (Wechselrichter, Inverter) zwischen dem Energiespeicher und dem Elektromotor verschaltet. Dem Energiespeicher ist hierbei ein (Gleichspannungs-)Zwischenkreis nachgeordnet, an welchen eine Brückenschaltung des Stromrichters angeschlossen ist. Der Energiespeicher und der Zwischenkreis wirken hierbei als eine Stromquelle zur Bereitstellung des eingangsseitigen Gleichstroms (Eingangsstrom) für den Stromrichter. Der Motorstrom wird durch eine pulsweitenmodulierte (PWM) Ansteuerung von Halbleiterschaltern der Brückenschaltung als ein mehrphasiger Ausgangsstrom erzeugt. Durch die Pulse der PWM-Ansteuerung werden die Halbleiterschalter getaktet zwischen einem leitenden und einem sperrenden Zustand umgeschaltet.

Durch die Umschaltvorgänge der Halbleiterschalter werden Wechselströme in den Leitungen des Zwischenkreises beziehungsweise der Stromquelle erzeugt. Diese Wechselströme sind hinsichtlich einer Einhaltung von EMV-Richtlinien (elektromagnetische Verträglichkeit) als kritisch zu bewerten.

Der Erfindung liegt die Aufgabe zugrunde, ein besonders geeignetes Verfahren zum Betrieb einer elektrischen Maschine anzugeben. Insbesondere soll das EMV-Verhalten der elektrischen Maschine während des Betriebs verbessert werden. Der Erfindung liegt weiterhin die Aufgabe zugrunde, eine nach einem derartigen Verfahren arbeitende elektrische Maschine anzugeben.

Hinsichtlich des Verfahrens wird die genannte Aufgabe mit den Merkmalen des Anspruchs 1 und hinsichtlich der elektrischen Maschine mit den Merkmalen des Anspruchs 8 erfindungsgemäß gelöst. Vorteilhafte Ausgestaltungen und Weiterbildungen sind Gegenstand der jeweiligen Unteransprüche.

Das erfindungsgemäße Verfahren ist zum Betreiben einer elektrischen Maschine geeignet und eingerichtet. Die elektrische Maschine weist hierbei einen Energiespeicher mit einem nachgeschalteten (Gleichspannungs-)Zwischenkreis auf, die zusammen als eine Stromquelle (Spannungsversorgung) für einen Elektromotor der Maschine ausgeführt sind. Zwischen der Stromquelle und dem Elektromotor ist hierbei ein Stromrichter, beispielsweise in Form eines Wechselrichters (Inverter), verschaltet.

Im Betrieb der Maschine wandelt der Stromrichter einen Eingangsstrom der Stromquelle in einen mehrphasigen, insbesondere dreiphasigen, Ausgangsstrom (Motorstrom, Drehstrom) für den Elektromotor. Hierzu wird eine Anzahl von in den Zwischenkreis verschalteten Halbleiterschaltern des Stromrichters mit einer pulsweitenmodulierten (PWM) Ansteuerung getaktet angesteuert. Die PWM-Ansteuerung weist je Phase mindestens ein impulsförmiges Signal (Puls) zum Umschalten der jeweiligen Halbleiterschalter auf. Der oder jeder Puls wird zu einem ersten Zeitpunkt erzeugt und nach einer jeweiligen Pulsdauer zu einem zweiten Zeitpunkt beendet.

Verfahrensgemäß wird für jeden Wechselstromanteil, der im Zuge der pulsweitenmodulierten Ansteuerung der Halbleiterschalter in dem Zwischenkreis der Stromquelle erzeugt wird, ein Frequenzspektrum bestimmt. Hierzu werden die Wechselstromanteile beispielsweise mittels Fouriertransformation in den Frequenzraum überführt. Die Pulsdauern der Pulse der pulsweitenmodulierten Ansteuerung werden hierbei derart eingestellt, dass die Summe der Frequenzspektren der Wechselstromanteile (Summenspektrum) minimal wird. Dadurch wird der durch die Wechselstromanteile in der Stromquelle gebildete Wechselstrom reduziert beziehungsweise minimiert, was sich vorteilhaft auf das EMV-Verhalten der elektrischen Maschine überträgt. Insbesondere wird hierdurch die Belastung der Strom- oder Spannungsquelle reduziert. Des Weiteren ist es möglich hierdurch die Akustik der Maschine zu verbessern, d. h. es wird eine Geräuschreduzierung ermöglicht.

Die Frequenzspektren der Wechselstromanteile (Stromblock) weisen in der Regel vergleichbare Amplituden auf, welche sich jedoch in der Phasenlage voneinander unterscheiden. Durch die Einstellung der Pulsdauern werden die Phasenlagen der Frequenzspektren gegeneinander verschoben, ohne dass sich dabei die Amplitude der Frequenzspektren verändert. Durch eine geeignete Wahl der Pulsdauern ist es daher möglich, zumindest für bestimmte Frequenzen eine Minimierung des Summenspektrums und somit des Wechselstroms in der Stromquelle zu erreichen.

Das Summenspektrum ist typischerweise nicht über den vollständigen Frequenzbereich minimierbar, es ist jedoch für eine zu optimierende Frequenz, insbesondere der Taktfrequenz der PWM-Ansteuerung, ausreichend, die Minimierung durchzuführen. Die Amplitude wird minimal, wenn die Phasenlagen der einzelnen Frequenzspektren der Wechselstromanteile gegensätzlich oder gegengleich zueinander verschoben sind. In einer geeigneten Weiterbildung werden zur Minimierung der Summe die einzelnen Frequenzspektren, insbesondere in dem Bereich um die zu optimierende Frequenz, um 180° zueinander phasenverschoben.

In einer vorteilhaften Ausführung werden die Pulsdauern für eine bestimmte Frequenz eingestellt, insbesondere der Frequenz eines Maximums des oder jedes Frequenzspektrums. Das Maximum des oder jedes Frequenzspektrums ist im Wesentlichen durch die Taktfrequenz (Grundwellenanteil) der PWM-Ansteuerung beziehungsweise der Pulse bestimmt. Vorzugsweise erfolgt die Bestimmung der relevanten Frequenz dynamisch während des Betriebs der elektrischen Maschine. Mit anderen Worten erfolgt die Einstellung der Pulsdauern für die relevante Frequenz während der Laufzeit in Echtzeit.

In einer möglichen Ausführungsform erfolgt die Bestimmung mit der Taktfrequenz. Dies bedeutet, dass jede Periode der PWM-Ansteuerung einzeln optimiert wird. Hierbei ist es beispielsweise denkbar die optimalen Pulsdauern lediglich einmal pro Millisekunde zu berechnen. Dadurch wird die Rechenlast reduziert. Ebenso denkbar ist aber auch eine schaltungstechnische Ausführungsform mit einem Einsatz eines Bandpasses für die relevante Frequenz, wobei die Pulsdauern während einer Einregelzeit derart eingestellt werden, dass sich ein Minimum einstellt.

In einer zweckmäßigen Ausbildung wird der oder jeder Puls um eine erste Zeitdauer früher als der erste Zeitpunkt erzeugt und/oder um eine zweite Zeitdauer später als der zweite Zeitpunkt beendet. Durch die Anpassung der ersten und zweiten Zeitdauer werden effektiv die zeitlichen Positionen des ersten und zweiten Zeitpunkts während der PWM-Ansteuerung verschoben. In der Folge wird somit die Pulsdauer variiert beziehungsweise eingestellt. Dadurch ist in einfacher Art und Weise eine (relative) Phasenverschiebung der Frequenzspektren der Wechselstromanteile zueinander realisiert.

In einer geeigneten Ausgestaltung wird jeder Puls für die Erzeugung des mehrphasigen Ausgangsstroms mit der gleichen ersten und zweiten Zeitdauer zur Einstellung der Pulsdauer versehen. Mit anderen Worten wird für alle Einschaltungen, das bedeutet dem Umschalten der Halbleiterschalter von dem nichtleitenden (sperrenden) in den leitenden Zustand, eine gemeinsame erste Zeitdauer verwendet, sodass alle Pulse zu einem früheren (ersten) Zeitpunkt erzeugt werden. Ebenso werden entsprechend für alle Ausschaltungen, das bedeutet dem Umschalten der Halbleiterschalter von dem leitenden in den sperrenden Zustand, eine gemeinsame zweite Zeitdauer verwendet, sodass alle Pulse zu einem späteren (zweiten) Zeitpunkt beendet werden. Ebenso denkbar ist beispielsweise auch dass alle Pulse zu einem späteren Zeitpunkt erzeugt werden und/oder zu einem früheren Zeitpunkt beendet werden.

Die Zeitdauern mit welcher die Pulsdauern der PWM-Ansteuerung eingestellt werden sind für unterschiedliche Perioden veränderbar. Dies bedeutet, dass beispielsweise für jede Periode der PWM-Ansteuerung neue Werte für die Zeitdauern bestimmt werden oder dass über mehrere Perioden hinweg die gleichen Werte für die Zeitdauern verwendet werden. Wesentlich ist, dass alle Pulsdauern der unterschiedlichen Phasen während einer Periode der mit den gleichen Zeitdauern geändert werden. Mit anderen Worten ist die Differenz der Pulsdauern untereinander vor und nach der Einstellung der Pulsdauern innerhalb einer Periode konstant.

In einer vorteilhaften Ausgestaltung sind die erste und die zweite Zeitdauer betragsmäßig gleich. Insbesondere werden hierdurch die erzeugten Phasenströme des Ausgangsstroms lediglich geringfügig beeinflusst, sodass keine wesentliche Beeinflussung des Motorbetriebs auftritt.

Ein zusätzlicher oder weiterer Aspekt des erfindungsgemäßen Verfahrens sieht vor, dass die erste und zweite Zeitdauer im Voraus für verschiedene bestimmte Frequenzen berechnet und in einer Tabelle hinterlegt werden. Dadurch ist ein besonders aufwandsarmes Verfahren realisiert, welches gleichzeitig flexibel an verschiedene Frequenzen, beispielsweise aufgrund einer Veränderung der Taktfrequenz der PWM-Ansteuerung, anpassbar ist.

Die elektrische Maschine ist insbesondere für den elektromotorischen Antrieb in einem Kraftfahrzeug, beispielsweise für ein Verstellsystem als Kraftfahrzeugkomponente, geeignet und eingerichtet. Der Elektromotor ist vorzugsweise bürstenlos mit einem Stator und mit einem darin rotierbar gelagerten Rotor ausgeführt. Der Stator weist eine Anzahl von Phasenwicklungen auf, welche einerseits an den Stromrichter geführt und andererseits beispielsweise in einem gemeinsamen Verknüpfungspunkt (Sternpunkt) in Sternschaltung verschaltet sind. Der Stromrichter weist einen Controller, das bedeutet ein Steuergerät, auf. Der Controller ist hierbei allgemein - programm- und/oder schaltungstechnisch - zur Durchführung des vorstehend beschriebenen Verfahrens geeignet und eingerichtet. Der Controller ist somit konkret dazu eingerichtet, während des Betriebs die Wechselstromanteile in der Stromquelle zu erfassen, und durch Steuerung und/oder Regelung der PWM-Ansteuerung die Pulsdauern der (PWM-)Pulse derart einzustellen, dass diese in ihrer relativen (Frequenz-)Phasenlage gegeneinander verschoben werden, so dass der Wechselstrom in der Stromquelle minimiert wird.

In bevorzugter Ausgestaltung ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Benutzer - bei Ausführung der Betriebssoftware in dem Mikrocontroller automatisch Durchgeführt wird.

Der Controller kann im Rahmen der Erfindung alternativ auch durch ein nichtprogrammierbares elektronisches Bauteil, zum Beispiel einen ASIC (anwendungsspezifischer integrierter Schaltkreis), gebildet sein, in dem die Funktionalität zur Durchführung des Verfahrens mit schaltungstechnischen Mitteln implementiert ist.

Die mit dem Verfahren betriebene elektrische Maschine weist somit ein verbessertes Verhalten hinsichtlich einer EMV-Abstrahlung sowie hinsichtlich einer durch die Schaltprozesse der Halbleiterschalter auftretenden Geräuschentwicklung auf. Das erfindungsgemäße Verfahren ist insbesondere für den Einsatz in drehzahlgeregelten Systemen geeignet und eingerichtet. Grundsätzlich ist die Anwendung hierbei nicht auf den Automobilbereich eingeschränkt.

Nachfolgend wird ein Ausführungsbeispiel der Erfindung anhand einer Zeichnung näher erläutert. Darin zeigen in schematischen und vereinfachten Darstellungen:

Fig. 1 eine elektrische Maschine mit einer Stromquelle und mit einem Elektromotor sowie mit einem dazwischen verschalteten Stromrichter,

Fig. 2 drei Phasenwicklungen eines dreiphasigen Elektromotors der Maschine in Sternschaltung,

Fig. 3 ein Brückenmodul einer Brückenschaltung des Stromrichters zur Ansteuerung einer Phasenwicklung des Elektromotors,

Fig. 4 ein Ersatzschaltbild der Stromquelle,

Fig. 5 ein Diagramm einer PWM-Ansteuerung der Phasenwicklungen, und

Fig. 6a, 6b jeweils ein Diagramm der PWM-Ansteuerung bei einer Phasenverschiebung.

Einander entsprechende Teile und Größen sind in allen Figuren stets mit den gleichen Bezugszeichen versehen.

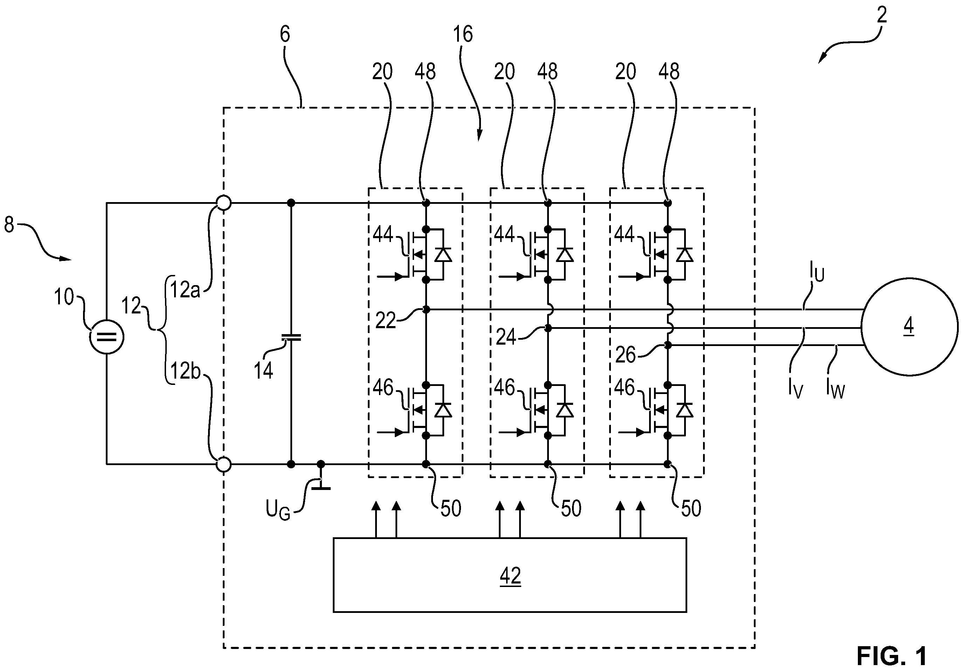

Die Fig. 1 zeigt eine elektrische Maschine 2 für ein elektromotorisches Verstellsystem eines nicht näher dargestellten Kraftfahrzeugs, beispielsweise ein Fensterheber oder eine Sitzverstellung. Die Maschine 2 umfasst hierzu einen dreiphasigen Elektromotor 4, welcher mittels eines Stromrichters 6 an eine Stromquelle (Spannungsversorgung) 8 angeschlossen ist. Die Stromquelle 8 umfasst in diesem Ausführungsbeispiel einen fahrzeuginternen Energiespeicher 10, beispielsweise in Form einer (Kraftfahrzeug-)Batterie, sowie einen damit verbundenen (Gleichspannungs-)Zwischenkreis 12, welcher sich zumindest teilweise in den Stromrichter 6 erstreckt.

Der Zwischenkreis 12 ist im Wesentlichen durch eine Hinleitung 12a und eine Rückleitung 12b gebildet, mittels welchen der Stromrichter 6 an den Energiespeicher 10 angeschlossen ist. Die Leitungen 12a und 12b sind zumindest teilweise in den Stromrichter 6 geführt, in welchen zwischen diesen ein Zwischenkreiskondensator 14 sowie eine Brückenschaltung 16 verschaltet sind.

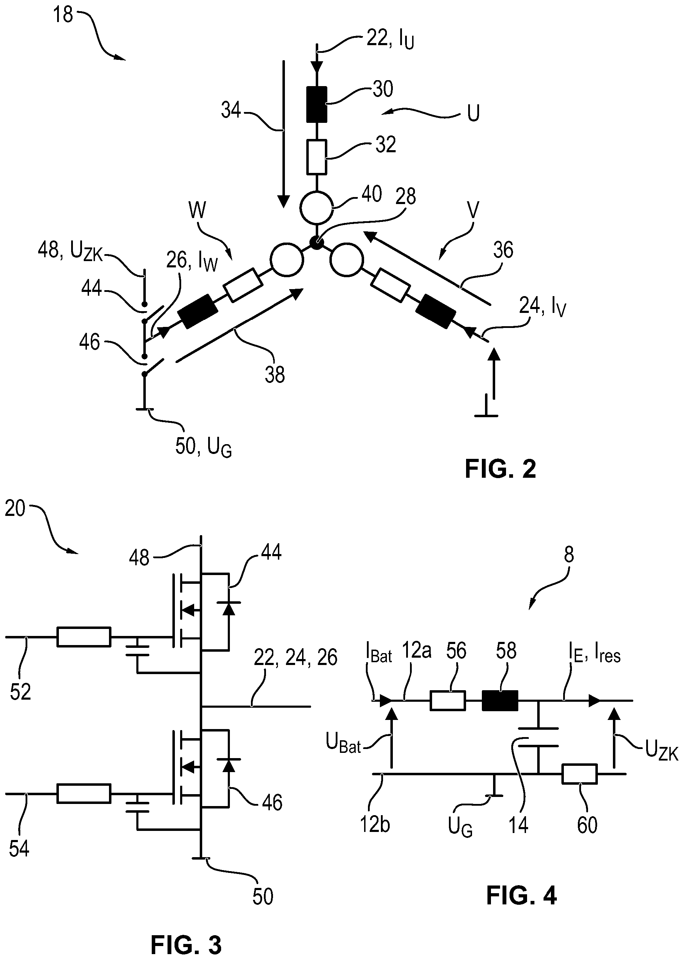

Im Betrieb der Maschine 2 wird ein der Brückenschaltung 16 zugeführter Eingangsstrom $I_E$ in einen dreiphasigen Ausgangsstrom (Motorstrom, Drehstrom) $I_U$, $I_V$, $I_W$ für die drei Phasen U, V, W des Elektromotors 4 gewandelt. Die nachfolgend auch als Phasenströme bezeichneten Ausgangsströme $I_U$, $I_V$, $I_W$ werden an die entsprechenden Phasen(-wicklungen) U, V, W (Fig. 2) eines nicht näher dargestellten Stators geführt.

In der Fig. 2 ist eine Sternschaltung 18 der drei Phasenwicklungen U, V, W dargestellt. Die Phasenwicklungen U, V und W sind mit jeweils einem (Phasen-)Ende 22, 24, 26 an ein jeweiliges Brückenmodul 20 (Fig. 3) der Brückenschaltung 16 geführt, und mit dem jeweils gegenüberliegenden Ende in einem Sternpunkt 28 als gemeinsamen Verbindungsanschluss miteinander verschaltet. In der Darstellung der Fig. 2 sind die Phasenwicklungen U, V und W jeweils mittels eines Ersatzschaltbildes in Form einer Induktivität 30 und eines ohmschen Widerstandes 32 sowie einem jeweiligen Spannungsabfall 34, 36, 38 gezeigt. Die jeweils über die Phasenwicklung U, V, W abfallende Spannung 34, 36, 38 ist schematisch durch Pfeile repräsentiert und ergibt sich aus der Summe der Spannungsabfälle über der Induktivität 30 und dem ohmschen Widerstand 32 sowie der induzierten Spannung 40. Die durch eine Bewegung eines Rotors des Elektromotors 4 induzierte Spannung 40 (elektromagnetische Kraft, EMK, EMF) ist in der Fig. 2 anhand eines Kreises dargestellt.

Die Ansteuerung der Sternschaltung 18 erfolgt mittels der Brückenschaltung 16. Die Brückenschaltung 16 ist mit den Brückenmodulen 20 insbesondere als eine B6-Schaltung ausgeführt. In dieser Ausgestaltungsform wird im Betrieb an jede der Phasenwicklungen U, V, W in hoher Schaltfrequenz getaktet zwischen einem hohen (Gleich-)Spannungsniveau der Zuleitung 12a und einem niedrigen Spannungsniveau der Rückleitung 12b umgeschaltet. Das hohe Spannungsniveau ist hierbei insbesondere eine Zwischenkreisspannung $U_{ZK}$ des Zwischenkreises 12, wobei das niedrige Spannungsniveau vorzugsweise ein Erdpotential $U_G$ ist. Diese getaktete Ansteuerung ist als eine - in Fig. 1 mittels Pfeilen dargestellte - PWM-Ansteuerung durch einen Controller 42 ausgeführt, mit welcher eine Steuerung und/oder Regelung der Drehzahl, der Leistung sowie der Drehrichtung des Elektromotors 4 möglich ist.

Die Brückenmodule 20 umfassen jeweils zwei Halbleiterschalter 44 und 46, welche in der Fig. 2 lediglich schematisch und beispielhaft für die Phase W dargestellt sind. Das Brückenmodul 20 ist einerseits mit einem Potentialanschluss 48 an die Zuleitung 12a und somit an die Zwischenkreisspannung $U_{ZK}$ angeschlossen. Andererseits ist das Brückenmodul 20 mit einem zweiten Potentialanschluss 50 an die Rückleitung 12b und somit an das Erdpotential $U_G$ kontaktiert. Über die Halbleiterschalter 44, 46 ist das jeweilige Phasenende 22, 24, 26 der Phase U, V, W entweder mit der Zwischenkreisspannung $U_{ZK}$ oder mit dem Erdpotential $U_G$ verbindbar. Wird der Halbleiterschalter 44 geschlossen (leitend) und der Halbleiterschalter 46 geöffnet (nicht leitend), so ist das Phasenende 22, 24, 26 mit dem Potential der Zwischenkreisspannung $U_{ZK}$ verbunden. Entsprechend ist bei einem Öffnen des Halbleiterschalters 44 und einem Schließen des Halbleiterschalters 46 die Phase U, V, W mit dem Erdpotential $U_G$ kontaktiert. Dadurch ist es mittels der PWM-Ansteuerung möglich, jede Phasenwicklung U, V, W mit zwei unterschiedlichen Spannungsniveaus zu beaufschlagen.

In der Fig. 3 ist ein einzelnes Brückenmodul 20 vereinfacht dargestellt. In diesem Ausführungsbeispiel sind die Halbleiterschalter 44 und 46 als MOSFETs (metaloxide semiconductor field-effect transistor) realisiert, die jeweils mittels der PWM-Ansteuerung zwischen einem durchgeschalteten Zustand auf und einem sperrenden Zustand getaktet umschalten. Hierzu sind die jeweiligen Gateanschlüsse an entsprechende Steuerspannungseingänge 52, 54 geführt, mittels welcher die Signale der PWM-Ansteuerung des Controllers 42 übertragen werden.

Die Fig. 4 zeigt ein Ersatzschaltbild für die Stromquelle 8. Im Betrieb erzeugt der Energiespeicher 10 eine Batteriespannung $U_{Bat}$ sowie einen entsprechenden Batteriestrom $I_{Bat}$ zum Betrieb des Stromrichters 6. In der Fig. 4 ist der Innenwiderstand des Energiespeichers 10 als ein ohmscher Widerstand 56 und eine Eigeninduktivität des Energiespeichers 10 als eine Induktivität 58 dargestellt. In der Rückleitung 12b ist ein Shuntwiderstand 60 geschaltet, an welchem die Zwischenkreisspannung $U_{ZK}$ abfällt.

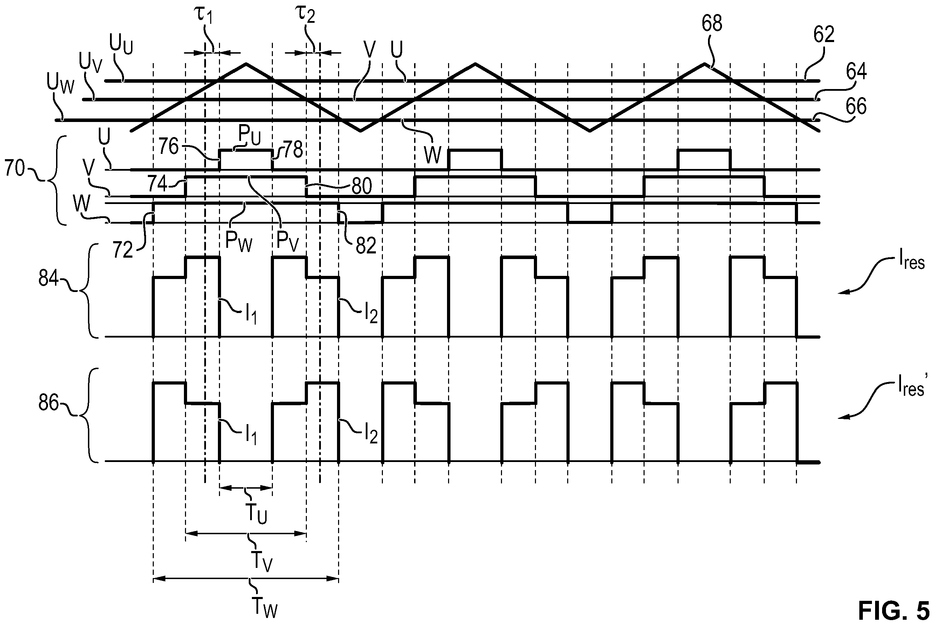

Anhand der Fig. 5 wird im Nachfolgenden der Signalverlauf an den einzelnen Phasenanschlüssen 22, 24, 26 gezeigt und erläutert, wie die Spannungs- beziehungsweise PWM-Signale an den einzelnen Phasenwicklungen U, V, W vorteilhaft gesteuert beziehungsweise geregelt werden können und welche Konsequenzen bezüglich der Ströme $I_U$, $I_V$, $I_W$ in den Phasenwicklungen U, V, W und des Eingangsstroms $I_E$ der externen Stromquelle 8 sich hieraus ergeben.

Das Diagramm der Fig. 5 umfasst vier horizontale, übereinander angeordnete Abschnitte. Horizontal, das bedeutet auf der X- oder Abszissenachse, ist die Zeit aufgetragen. Beispielhaft sind in der Fig. 5 drei Perioden der PWM-Ansteuerung dargestellt, wobei eine Periode hierbei beispielsweise 50 μs (Mikrosekunden) lang ist.

Die Fig. 5 zeigt eine PWM-Ansteuerung, bei welcher die Phasenanschlüsse 22, 24, 26 des Elektromotors 4 jeweils mit einem PWM-(Puls-)Signal $P_U$, $P_V$, $P_W$ unterschiedlichen Tastgrads (duty cycle) angesteuert werden. Die momentanen Soll-Spannungen $U_U$, $U_V$ und $U_W$ der drei Phasen U, V und W sind in Fig. 5 mit einem Momentanwert 62, 64 und 66 jeweils als horizontale Linie dargestellt. Die Sollspannungswerte variieren hierbei über die Zeit in Abhängigkeit von der Drehzahl des Elektromotors 4 jeweils nach Art einer Sinusfunktion. Dies führt dazu, dass die Linien der Momentanwerte 62, 64 und 66 sich periodisch in senkrechter Richtung, das bedeutet entlang der Y- beziehungsweise Ordinatenachse, auf und ab bewegen.

Die sägezahnförmige Linie im oberen Abschnitt des Diagramms repräsentiert einen periodisch linear ansteigenden und linear abfallenden Zählerstand 68 eines in dem Controller 42 integrierten Zählers. Die Schnittpunkte zwischen den für einen bestimmten Zeitpunkt fest liegenden Schwellen der einzelnen Phasen U, V, W, das bedeutet den Momentanwerten 62, 64, 66 mit dem sägezahnartigen Zählerstand 68, repräsentieren die Zeitpunkte für das Erzeugen und Beenden der (PWM-)Pulse $P_U$, $P_V$, $P_W$, mit welchen die Phasenwicklungen U, V, W beaufschlagt werden. Dies bedeutet, dass im Falle einer hohen Spannungsschwelle der Momentanwert 62, 64, 66 niedrig ist, so dass die Tastzeit des impulsförmigen Pulses $P_U$, $P_V$, $P_W$ lang ist, die entsprechende Phase U, V, W also lange mit dem Phasenstrom $I_U$, $I_V$, $I_W$ bestromt beziehungsweise mit einer Spannung beaufschlagt wird.

In dem zweiten Abschnitt 70 des Diagramms der Fig. 5 sind die Spannungsverläufe an den Phasenanschlüssen 22, 24 und 26 zeitaufgelöst dargestellt. In diesem Ausführungsbeispiel wird zunächst die Phase W zu einem Zeitpunkt 72 mit einer Spannung beaufschlagt wird. Zeitlich verzögert wird anschließend zu einem Zeitpunkt 74 die Phasenwicklung V mit einer Spannung versorgt. Danach beginnt die Spannungsversorgung der Phase U zu einem Zeitpunkt 76. Nach einer ersten Pulsdauer $T_U$ wird die Phase U zu einem Zeitpunkt 78 von dem Spannungssignal getrennt und somit der Puls $P_U$ beendet. Anschließend wird der Puls $P_V$ der Phase V nach einer Pulsdauer $T_V$ zu einem Zeitpunkt 80 und der Puls $P_W$ der Phase W nach einer Pulsdauer $T_W$ zu einem Zeitpunkt 82 beendet. Dieser Spannungsverlauf wird als Pulssequenz für die drei Phasen U, V, W periodisch wiederholt.

Im dritten Abschnitt 84 und dem vierten Abschnitt 86 der Fig. 5 ist jeweils ein zeitlicher Verlauf des durch die PWM-Ansteuerung resultierenden Wechselstroms $I_{res}$ in der Stromquelle 8, also beispielsweise im Zwischenkreis 12, dargestellt.

In dem Abschnitt 84 ist der Wechselstrom $I_{res}$ für eine Betriebssituation gezeigt, in welcher die Phasenwicklung U mit einem Phasenstrom $I_U$ von 4A (Ampere) und die Phasenwicklung V mit einem Phasenstrom $I_V$ von 1A sowie die Phasenwicklung W mit einem Phasenstrom $I_W$ von 3A betragsmäßig durchflossen ist. Bezüglich der Richtungen von und zu dem Sternpunkt 28 weisen die Phasenströme $I_V$ und $I_W$ eine gegenüber dem Phasenstrom $I_U$ invertierte Stromrichtung auf. Mit anderen Worten sind die Phasenströme $I_V$ und $I_W$ dem Phasenstrom $I_U$ entgegengesetzt gerichtet.

In dem Zeitraum zwischen den Zeitpunkten 72 und 74 fließt somit ein Strom von 3A durch die Phasenwicklung W, wobei ab dem Zeitpunkt 74 ein zusätzlicher Strom von 1 A durch die Phasenwicklung V hinzu addiert wird. Dadurch weist der resultierende Wechselstrom $I_{res}$ in dem Zeitraum zwischen den Zeitpunkten 74 und 76 ein Stromniveau von 4A auf. Zum Zeitpunkt 76 wird durch den Puls $P_U$ ein Strom hinzugefügt, welcher eine den anderen Strömen entgegengesetzter Stromrichtung bei gleicher Stromamplitude aufweist. Dadurch ist für die Pulsdauer $T_U$ zwischen den Zeitpunkten 76 und 78 der resultierende (Gesamt-)Wechselstrom $I_{res}$ im Wesentlichen vollständig reduziert.

In der Zeitdauer zwischen den Zeitpunkten 78 und 80 ist der Phasenstrom $I_U$ durch die Phase U wieder ausgeschaltet, sodass der Wechselstrom $I_{res}$ in diesem Zeitabschnitt erneut eine Amplitude von 4A aufweist. Zum Zeitpunkt 80 wird diese Amplitude wieder auf 3A reduziert und zum Zeitpunkt 82, nach Beendigung des Pulses $P_W$, im Wesentlichen vollständig reduziert.

Wie in der Fig. 5 vergleichsweise deutlich ersichtlich, werden durch die Pulsfolge im Wesentlichen zwei Wechselstromanteile (Stromblöcke) $I_1$ und $I_2$ gebildet, welche sich im Zuge der PWM-Ansteuerung periodisch wiederholen. Der Wechselstromanteil $I_1$ beginnt zum Zeitpunkt 72 und wird zum Zeitpunkt 76 beendet, wobei der Wechselstromanteil $I_2$ zum Zeitpunkt 78 beginnt und zum Zeitpunkt 82 beendet wird.

Insgesamt ergibt sich eine hohe Zahl von Schaltvorgängen pro Periode der Pulse $P_U$, $P_V$, $P_W$ sowie durch die stark variierenden Stromstärken im Zwischenkreis 12 ein hoher Wechselstrom $I_{res}$, welcher den Zwischenkreiskondensator 14 periodisch lädt und entlädt.

In dem Abschnitt 86 der Fig. 5 ist eine Situation dargestellt, in welcher die Stromrichtungen der Phasenströme $I_V$ und $I_W$ einander entgegengesetzt sind und die Stromrichtung in der Phase U die gleiche Orientierung aufweist wie in der Phase V. Auch in diesem Falle ergeben sich eine hohe Anzahl von (Um-)Schaltvorgängen mit ähnlich hohen Wechselstromanteilen $I_1$ und $I_2$.

Je nach Verlauf der Phasenströme $I_U$, $I_V$, $I_W$ stellt sich somit ein unterschiedlicher Wechselstrom $I_{res}$ ein. Der Wechselstrom $I_{res}$ weist eine Frequenzverteilung auf, deren Hauptanteile insbesondere bei einem n-fachen der PWM-(Takt-)Frequenz liegen.

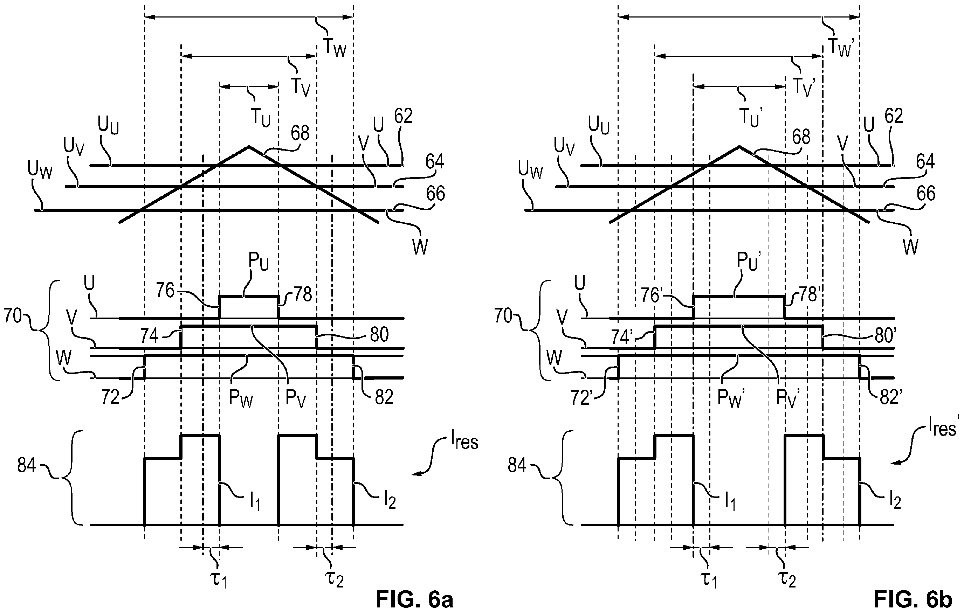

Nachfolgend wird anhand der Figuren 6a und 6b ein Verfahren zur Reduzierung des Wechselstroms $I_{res}$ im Zwischenkreis 12 näher beschrieben. Hierzu verwendet der Controller 42 ein Modulationsverfahren für die PWM-Ansteuerung, bei welchem das Frequenzspektrum des Wechselstroms $I_{res}$ derart beeinflusst wird, dass der Wechselstromanteil bei einer Frequenz, insbesondere bei einem Hauptanteil, minimiert wird.

Hierzu ermittelt der Controller 42, beispielsweise mittels Fouriertransformation, jeweils ein Frequenzspektrum $F_1(\omega)$, $F_2(\omega)$ für den Wechselstromanteil $I_1$ beziehungsweise $I_2$, wobei $\omega$ die Kreisfrequenz ist.

Die Frequenzspektren $F_1(\omega)$ und $F_2(\omega)$ weisen in der Regel vergleichbare Amplituden auf, unterscheiden sich jedoch in ihrer jeweiligen Phasenlage voneinander. Das entsprechende Frequenzspektrum $F_{res}(\omega)$ des resultierenden Wechselstromes $I_{res}$ ergibt sich aufgrund der Linearität der Fouriertransformation als Summe der einzelnen Frequenzspektren $F_1(\omega)$ und $F_2(\omega)$ zu

$$F_{res}(\omega) = F_1(\omega) + F_2(\omega).$$

Die Amplitude des Frequenzspektrums $F_1(\omega)$ wird für eine bestimmte Frequenz $\omega_0$ minimal, wenn die einzelnen Frequenzspektren $F_1(\omega)$ und $F_2(\omega)$ bei der Frequenz $\omega_0$ die Phasenlage gegensätzlich, das bedeutet um 180°, verschoben ist. Mathematisch ergibt sich eine Änderung der Phasenlage gemäß dem Verschiebungssatz durch Multiplikation mit einem komplexen Phasenfaktor gemäß der Beziehung

$$F_1'(\omega) = e^{-j\omega\tau_1} \, F_1(\omega),$$

wobei j die imaginäre Einheit und $T_1$ eine erste Zeitdauer oder Verschiebezeit ist.

Dies bedeutet, dass bei einer Verschiebung um die Zeitdauer $T_1$ lediglich die Phasenlage, nicht jedoch die Amplitude des Frequenzspektrums $F_1(\omega)$ geändert wird. Durch Verschiebung beider Frequenzspektren $F_1(\omega)$ und $F_2(\omega)$ folgt:

$$F_{res}'(\omega) = e^{-j\omega\tau_1} \, F_1(\omega) + e^{-j\omega\tau_2} \, F_2(\omega),$$

wobei $T_2$ eine Zeitdauer oder Verschiebezeit für das Frequenzspektrum $F_2(\omega)$ des Wechselstromanteils $I_2$ beschreibt.

Durch geeignete Wahl der Zeitdauern $T_1$ und $T_2$ ist es ermöglicht, dass für die Frequenz $\omega_0$ das Frequenzspektrum $F_{res}'(\omega_0)$ minimal wird. Die Frequenz $w_0$ ist hierbei insbesondere die Taktfrequenz der PWM-Ansteuerung, dies bedeutet, die Grund- oder Wiederholungsfrequenz der Wechselstromanteile $I_1$ und $I_2$.

Wie in den Figuren 6a und 6b schematisch angedeutet, wird diese Phasenverschiebung dadurch realisiert, dass die Wechselstromanteile $I_1$ und $I_2$ zeitlich gegeneinander verschoben werden. Zu diesem Zwecke werden alle Phasen U, V, W im Zuge der PWM-Ansteuerung einerseits um eine Zeitdauer $-T_1$ früher eingeschaltet. Dies bedeutet, dass die Pulse $P_U'$, $P_V'$, $P_W'$ zu einem um die Zeitdauer $-T_1$ vorgezogenen Zeitpunkt 72', 74', 76' erzeugt werden. Andererseits werden die Phasen U, V, W zu einem um die Zeitdauer $T_2$ verzögerten Zeitpunkt 78', 80', 82' ausgeschaltet. Mit anderen Worten werden die Pulse $P_U'$, $P_V'$, $P_W'$ nach einer Zeitdauer $T_2$ später beendet. Dadurch werden effektiv die Pulsdauern $T_U'$, $T_V'$, $T_W'$ der $P_U'$, $P_V'$, $P_W'$ um eine Zeitdauer $T_1 + T_2$ verlängert. Dies bedeutet, dass der Tastgrad der PWM-Ansteuerung im Zuge der Phasenverschiebung eingestellt wird.

In dem Ausführungsbeispiel der Fig. 6b sind die Zeitdauern $T_1$, $T_2$ betragsmäßig gleich, das bedeutet insbesondere, dass die Zeitdauer $-T_1$ gleich der Zeitdauer $T_2$ ist. Dadurch wird sichergestellt, dass der Mittelwert des resultierenden Wechselstroms $I'_{res}$ nicht wesentlich geändert wird.

In einer geeigneten Ausgestaltung sind die Zeitdauern $T_1$ und $T_2$ im Vorfeld für unterschiedliche Frequenzen $\omega_0$ bestimmt und in einer Tabelle des Controllers 42 hinterlegt. Zusätzlich oder alternativ werden die Wechselstromanteile $I_1$ und $I_2$ im Betrieb über den Shuntwiderstand 60 erfasst, und die Zeitdauern $T_1$ und $T_2$ in Echtzeit berechnet.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

Bezugszeichenliste

| | |
|---|---|
| 2 | Maschine |
| 4 | Elektromotor |
| 6 | Stromrichter |
| 8 | Stromquelle |
| 10 | Energiespeicher |
| 12 | Zwischenkreis |
| 12a | Hinleitung |
| 12b | Rückleitung |
| 14 | Zwischenkreiskondensator |
| 16 | Brückenschaltung |
| 18 | Sternschaltung |
| 20 | Brückenmodul |
| 22, 24, 26 | Phasenende |
| 28 | Sternpunkt |
| 30 | Induktivität |
| 32 | Widerstand |
| 34, 36, 38 | Spannungsabfall |
| 40 | Spannung |
| 42 | Controller |
| 44, 46 | Halbleiterschalter |
| 48, 50 | Potentialanschluss |
| 52, 54 | Steuerspannungseingang |
| 56 | Widerstand |
| 58 | Induktivität |
| 60 | Shuntwiderstand |
| 62, 64, 66 | Momentanwert |
| 68 | Zählerstand |
| 70 | Abschnitt |
| 72, 74, 76 | Zeitpunkt |
| 72', 74', 76' | Zeitpunkt |
| 78, 80, 82 | Zeitpunkt |
| 78', 80', 82' | Zeitpunkt |
| 84, 86 | Abschnitt |

| | |
|---|---|
| U, V, W | Phase/Phasenwicklung |
| $I_U$, $I_V$, $I_W$ | Phasenstrom/Ausgangsstrom |
| $I_E$ | Eingangsstrom |

| $U_{ZK}$ | Zwischenkreisspannung |
|---|---|
| $U_G$ | Erdpotential |
| $I_{Bat}$ | Batteriestrom |
| $U_{Bat}$ | Batteriespannung |
| $U_U, U_V, U_W$ | Soll-Spannungen |
| $P_U, P_V, P_W$ | Pulssignal/Puls |
| $P_U', P_V', P_W'$ | Pulssignal/Puls |
| $T_U, T_V, T_W$ | Pulsdauer |
| $T_U', T_V', T_{W'}$ | Pulsdauer |
| $I_{res}, I_{res}'$ | Wechselstrom |
| $I_1, I_2$ | Wechselstromanteil |
| $F_1(\omega), F_2(\omega)$ | Frequenzspektrum |
| $F_{res}(\omega), F'_{res}(\omega)$ | Frequenzspektrum |
| $\omega, \omega_0$ | Frequenz |
| $E_1, T_2$ | Zeitdauer/Verschiebungszeit |

**Patentansprüche**

1. Verfahren zum Betreiben einer elektrischen Maschine (2) mit einer Stromquelle (8) und mit einem Elektromotor (4) sowie mit einem dazwischen geschalteten Stromrichter (6),

   - bei welchem ein Eingangsstrom ($I_E$) der Stromquelle (8) mittels einer pulsweitenmodulierten Ansteuerung einer Anzahl von Halbleiterschaltern (44, 46) des Stromrichters (6) in einen mehrphasigen Ausgangsstrom ($I_U$, $I_V$, $I_W$) für den Elektromotor (4) gewandelt wird, wobei der oder jeder Puls ($P_U$, $P_V$, $P_W$) zu einem ersten Zeitpunkt (72, 74 ,76) erzeugt und nach einer Pulsdauer ($T_U$, $T_V$, $T_W$) zu einem zweiten Zeitpunkt (78, 80, 82) beendet wird,
   - bei welchem für jeden Wechselstromanteil ($I_1$, $I_2$), der im Zuge der pulsweitenmodulierten Ansteuerung der Halbleiterschalter (44, 46) in einem Zwischenkreis (12) der Stromquelle (8) erzeugt wird, ein Frequenzspektrum ($F_1(\omega)$, $F_2(\omega)$) bestimmt wird, und
   - bei welchem die Pulsdauern ($T_U'$, $T_V'$, $T_{W'}$) der Pulse ($P_U'$, $P_V'$, $P_W'$) der pulsweitenmodulierten Ansteuerung derart eingestellt werden, dass die Summe der Frequenzspektren ($F_{res}(\omega)$) der Wechselstromanteile ($I_1$, $I_2$) minimal wird.

2. Verfahren nach Anspruch 2,
   **dadurch gekennzeichnet,**
   **dass** zur Minimierung der Summe der Frequenzspektren ($F_{res}(\omega)$)) diese um 180° zueinander phasenverschoben werden.

3. Verfahren nach Anspruch 1 oder 2,
   **dadurch gekennzeichnet,**
   **dass** die Pulsdauern ($T_U'$, $T_V'$, $T_{W'}$) für eine bestimmte Frequenz ($\omega_0$), insbesondere der Frequenz eines Maximums des oder jedes Frequenzspektrums ($F_1(\omega)$, $F_2(\omega)$), eingestellt werden.

4. Verfahren nach Anspruch 1 bis 3,
   **dadurch gekennzeichnet,**
   **dass** der oder jeder Puls ($P_U'$, $P_V'$, $P_W'$) um eine erste Zeitdauer ($T_1$) früher als der erste Zeitpunkt (72, 74, 76) erzeugt und/oder um eine zweite Zeitdauer ($T_2$) später als der zweite Zeitpunkt (78, 80, 82) beendet wird.

5. Verfahren nach Anspruch 4,
   **dadurch gekennzeichnet,**
   **dass** jeder Puls ($P_U'$, $P_V'$, $P_W'$) für die Erzeugung des mehrphasigen Ausgangsstroms ($I_U$, $I_V$, $I_W$) mit der gleichen ersten und zweiten Zeitdauer ($T_1$, $T_2$) zur Einstellung der Pulsdauer ($T_U'$, $T_V'$, $T_{W'}$) versehen wird.

6. Verfahren nach Anspruch 4 oder 5,
   **dadurch gekennzeichnet,**
   **dass** die erste und zweite Zeitdauer ($T_1$, $T_2$) betragsmäßig gleich sind.

7. Verfahren nach einem der Ansprüche 4 bis 6,

**dadurch gekennzeichnet,**
**dass** die erste und zweite Zeitdauer ($T_1$, $T_2$) für verschiedene bestimmte Frequenzen ($\omega$) berechnet und in einer Tabelle hinterlegt werden.

8. Elektrischen Maschine (2), insbesondere für ein Kraftfahrzeug, mit einer Stromquelle (8) und mit einem Elektromotor (4) sowie mit einem dazwischen geschalteten Stromrichter (6) mit einem Controller (42) zur Durchführung eines Verfahrens nach einem der Ansprüche 1 bis 7.

FIG. 1

EP 3 285 381 A1

FIG. 2

FIG. 3

FIG. 4

**FIG. 5**

EP 3 285 381 A1

FIG. 6a

FIG. 6b

**Europäisches Patentamt**
**European Patent Office**
**Office européen des brevets**

# EUROPÄISCHER RECHERCHENBERICHT

**Nummer der Anmeldung**

EP 17 18 3200

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2014 000945 A1 (BROSE FAHRZEUGTEILE [DE]) 30. Juli 2015 (2015-07-30)<br>* Zusammenfassung *<br>* Absatz [0004] - Absatz [0008] *<br>* Absatz [0039] - Absatz [0072] *<br>----- | 1-8 | INV.<br>H02M1/12<br>H02P27/08<br>H02P29/50 |
| X | DONALD GRAHAME HOLMES: "The Significance of Zero Space Vector Placement for Carrier-Based PWM Schemes",<br>IEEE TRANSACTIONS ON INDUSTRY APPLICATIONS, IEEE SERVICE CENTER, PISCATAWAY, NJ, US,<br>Bd. 32, Nr. 5,<br>1. Oktober 1996 (1996-10-01), XP011022072,<br>ISSN: 0093-9994<br>* Zusammenfassung *<br>* Seite 1122, rechte Spalte - Seite 1124, rechte Spalte; Abbildungen 1-6 *<br>----- | 1-8 | |
| A | Jelena Loncarski: "Analysis of the Current Ripple in Three-Phase Two-Level VSIs"<br>In: "Statistical Methods for Spoken Dialogue Management",<br>1. Januar 2014 (2014-01-01), Springer London, London, XP055436806,<br>ISSN: 2190-5053<br>ISBN: 978-1-4471-4923-1<br>Seiten 5-31, DOI: 10.1007/978-3-319-07251-7_2,<br>* Seite 8 - Seite 14; Abbildungen 2.6-2.9 *<br>----- | 1-8 | RECHERCHIERTE SACHGEBIETE (IPC)<br><br>H02M<br>H02P |

Der vorliegende Recherchenbericht wurde für alle Patentansprüche erstellt

| Recherchenort | Abschlußdatum der Recherche | Prüfer |
|---|---|---|
| München | 8. Januar 2018 | Zeng, Wenyan |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 3200

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2018

| Im Recherchenbericht angeführtes Patentdokument | Datum der Veröffentlichung | Mitglied(er) der Patentfamilie | Datum der Veröffentlichung |
|---|---|---|---|
| DE 102014000945 A1 | 30-07-2015 | CN 104811099 A<br>DE 102014000945 A1<br>EP 2899879 A2<br>KR 20150088756 A<br>US 2015214869 A1 | 29-07-2015<br>30-07-2015<br>29-07-2015<br>03-08-2015<br>30-07-2015 |

Für nähere Einzelheiten zu diesem Anhang : siehe Amtsblatt des Europäischen Patentamts, Nr.12/82

EPO FORM P0461